Europäisches Patentamt

European Patent Office

Office européen des brevets

Numéro de publication: **0 284 769**

**A1**

## DEMANDE DE BREVET EUROPEEN

21 Numéro de dépôt: **88102558.9**

22 Date de dépôt: **22.02.88**

51 Int. Cl.4 **B01F 15/00** , F16K 31/00 , G05D 11/13

30 Priorité: **27.02.87 LU 86797**

43 Date de publication de la demande:
**05.10.88 Bulletin 88/40**

84 Etats contractants désignés:
**BE DE ES FR GB GR IT LU NL**

71 Demandeur: **COMMUNAUTE EUROPEENNE DE L'ENERGIE ATOMIQUE (EURATOM)
Bâtiment Jean Monnet-DG XIII/A1 Plateau du Kirchberg
L-2920 Luxembourg(LU)**

72 Inventeur: **Payrissat, Maurice
Via Marconi, 48
I-21027 Ispra(IT)**

74 Mandataire: **Weinmiller, Jürgen
Lennéstrasse 9 Postfach 24
D-8133 Feldafing(DE)**

54 **Vanne d'injection micro-doseuse.**

57 L'invention concerne une vanne permettant d'injecter une faible quantité d'un fluide traceur dans un flux de fluide porteur et comportant un corps de vanne (1) et un obturateur (3) à commande électrique (5) coopérant avec un siège (8) de fermeture pour commander le débit d'admission du fluide traceur.

Selon l'invention, l'obturateur (3) est situé au centre d'une chambre (12) de mélange et le fluide porteur traverse constamment cette chambre perpendiculairement à la direction de mouvement dudit obturateur en balayant ainsi toute la périphérie de son siège (8). Une telle vanne est par exemple utile dans la simulation d'un air pollué d'une pollution définie. Le degré de pollution peut être modifié même en cours des essais par la commande électrique.

**FIG. 1**

## Vanne d'injection micro-doseuse

L'invention concerne une vanne permettant d'injecter une faible quantité d'un fluide traceur dans un flux de fluide porteur et comportant un corps de vanne et un obturateur à commande électrique coopérant avec un siège de fermeture pour commander le débit d'admission du fluide traceur.

Par le document FR-A-2 425 599, on connaît une telle vanne, dont l'obturateur, en forme d'une bille, est relié à un empilement de lames piézoélectriques. Par l'application de tensions adéquates aux différentes lames de l'empilement, on peut déplacer la bille par rapport à un siège de fermeture de la vanne de façon très réproductible et d'un pas très faible. Correspondamment, le débit de fluide traversant cette vanne peut être réglé trés finement et à des valeurs trés faibles, telles que par exemple $10^{-3} cm^3/min$.

Cette vanne étant conçue pour des injections d'un gaz dans une enceinte sous vide, son application pour la préparation de mélanges utilisables à pression normale fait apparaître un inconvénient. Dû au faible débit du fluide traceur dans les canalisations et espaces en aval de l'obturateur, la durée nécessaire pour équilibrer la composition du mélange est très longue. Cela gêne aussi bien après l'ouverture de la vanne, en début d'un essai, qu'après modification du débit pour obtenir des paliers à teneurs différentes de fluide traceur.

L'invention a donc pour but de proposer une vanne telle que spécifiée ci-dessus, qui est dépourvue de ces défauts et qui permet donc d'ajuster et de modifier instantanément la composition du mélange, et cela pour des débits très faibles du fluide traceur, tels que le mélange ne comporte par exemple que 0,5 ppb de fluide traceur (1 part fluide traceur par $2.10^9$ parts de fluide porteur).

Selon l'invention, ce but est atteint par le fait que l'obturateur de la vanne est situé au centre d'une chambre de mélange et que le fluide porteur traverse constamment cette chambre perpendiculairement à la direction de mouvement dudit obturateur en balayant ainsi toute la périphérie de son siège.

L'invention sera décrite ci-après plus en détail à l'aide d'un exemple de réalisation préféré et des dessins, dont

la fig. 1 montre en coupe axiale une vanne selon l'invention,

la fig. 2 représente une vue axiale sur la chambre de mélange de la vanne selon la fig. 1, l'obturateur étant enlevé, et

la fig. 3 montre un détail de la même vanne lors du montage.

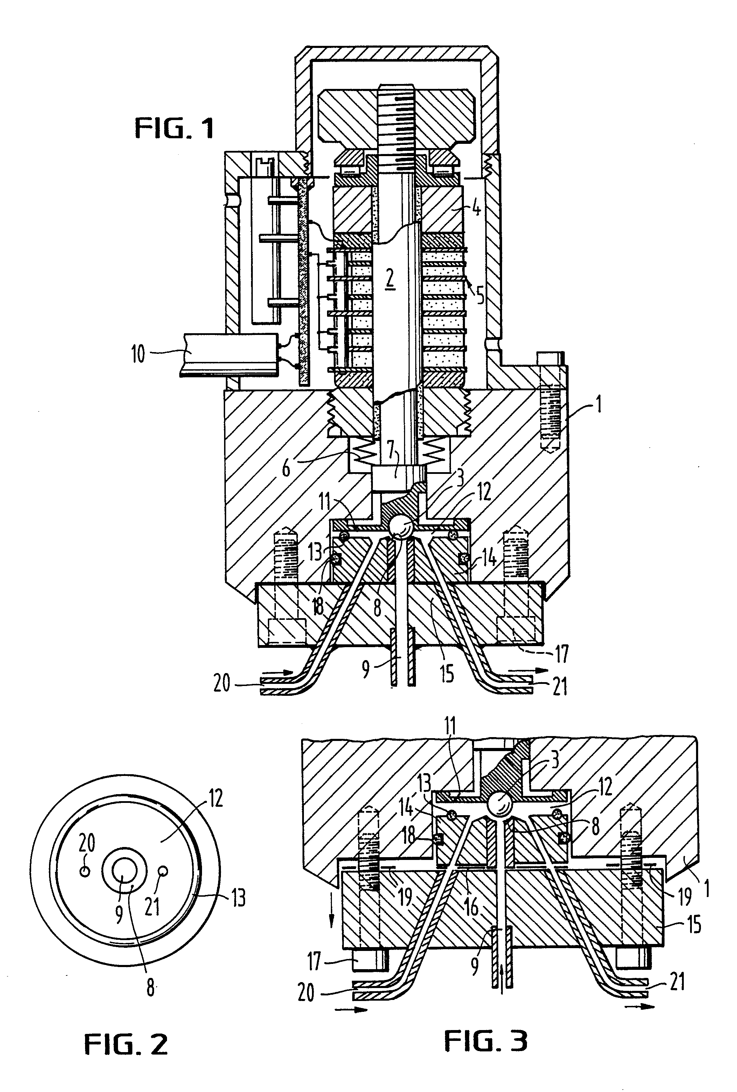

La conception générale de la vanne représentée sur la figure 1 correspond à celle du document FR-A-2 425 599 cité ci-dessus. La vanne comporte un corps de vanne 1, dans lequel peut glisser une tige 2 portant sur une extrémité un obturateur 3 et étant solidaire par l'autre extrémité d'une contre-plaque 4. Un empilement 5 de lames piézoélectriques s'étend entre les deux extrémités et s'appuie d'une part sur la contre-plaque 4 et d'autre part sur le corps 1 de la vanne. Un ressort 6, disposé entre un épaulement 7 de la tige et une surface du corps 1 en regard, tend à pousser la tige vers la position de fermeture. Dans cette position, l'obturateur 3, en forme d'une bille, s'applique fermément sur un siège 8 situé à l'extrémité d'une canalisation 9 d'amenée du fluide traceur. L'empilement des lames 5 reçoit d'une source 10, à travers des élecrodes intercalées, une tension de commande, qui agit sur la compression de l'empilement en direction de l'axe de la tige 2.

L'obturateur 3 est solidaire de la tige 2 et d'un disque circulaire et élastique 11 en acier inoxidable, dont le bord est coincé de façon étanche (joint 13) dans le corps de la vanne. Ce disque délimite la partie supérieure d'une chambre 12, dans laquelle débouche la canalisation 9. La chambre est circulaire et le siège 8 est situé au centre de cette chambre. Le siège 8 est intégré dans un support 14 qui constitue le fond de la chambre 12 et qui est fixé sur une base 15 par deux vis (non visibles dans les figures), un joint plat en PTFE 16 assurant la jonction des deux pièces.

Contrairement à la chambre de la vanne connue, cette chambre 12 remplit ici le rôle de chambre de mélange entre les deux fluides. Une canalisation 20 d'amenée du fluide porteur et une canalisation 21 de sortie débouchent dans cette chambre symétriquement par rapport à l'obturateur 3. Le fluide porteur balaye donc constamment le siège 8 de la vanne. Les parois supérieure et inférieure délimitant ladite chambre 12 sont rendues inertes et peu absorbantes au fluide traceur par revêtement de PTFE après polissage. Le support 14 du siège 8 de l'obturateur 3 est soit en acier inoxidable recouvert d'un spray de PTFE sur sa partie supérieure, soit en PTFE massif.

La base de la vanne 15 coulisse dans le corps de vanne 1, celui-ci jouant le rôle de pièce de guidage par déblocage des vis 17. Comme le montre la fig. 3, le but de cette particularité est de désolidariser les deux parties de la vanne afin de faciliter la vidange de la canalisation 9 avant la première utilisation et après changement de gaz traceur. Un joint torique 18 autour du support 14 assure, lors de cette opération, l'étanchéité de la chambre de mélange vers l'environnement.

Cette caractéristique est aussi un avantage pour permettre l'adjonction de cales calibrées en acier inoxydable 19 entre le corps 1 et la base 15 dans le but d'élever la gamme d'ouverture de la vanne (cas particulier d'un fluide traceur à très faible tension de vapeur).

Sans cales 19, en absence de tension aux bornes de l'empilement piézoélectrique 5, l'obturateur 3 se trouve appliqué fermement sur son siège 8, et le fluide porteur, matrice du mélange désiré, entre par la canalisation 20, puis s'évacue par la canalisation de sortie 21. Dès qu'un signal électrique est appliqué, l'obturateur 3 se soulève de son siège 8 et laisse passer un débit de fluide traceur fonction du signal et de la pression de vapeur dans la canalisation 9. Le fluide injecté est aussitôt mélangé au fluide porteur qui circule dans la chambre 12 autour de l'obturateur. Toute modification de la position de l'obturateur par rapport à son siège, et par conséquent du débit de fluide traceur, se répercute immédiatement sur la composition du mélange final évacué par la canalisation 21. Il n'y a aucun espace mort susceptible d'entraîner retard et hétérogénéité par accumulation de fluide traceur.

L'invention permet à la vanne de préparer des mélanges gazeux dans une fourchette de concentration étendue, pouvant par exemple varier, dans un flux constant de 1 litre/min de gaz porteur, entre 0,5 ppb et 500 ppb (parts par milliard) de gaz traceur.

Contrairement au système à perméation, qui nécessite une certaine tension de vapeur du fluide traceur pour pouvoir diffuser à travers une membrane, cette vanne fonctionne à température ambiante. Elle nécessite donc une régulation moins rigoureuse de la température (régulation du laboratoire). D'un encombrement très réduit, elle peut servir à préparer, après calibration, des mélanges reproductibles pour l'étalonnage d'analyseurs atmosphériques de gaz en traces.

Travaillant grâce à une simple tension électrique, la concentration du mélange peut, par des montages électroniques appropriés, être asservie à une grandeur quelconque. Grâce à sa réponse rapide, la vanne peut être utilisée pour simuler un degré de pollution déterminé ou même variable selon une courbe donnée.

Les différents matériaux de la vanne sont conçus pour travailler avec des fluides corrosifs, sous des pressions différentielles de plusieurs bars et à une température allant jusqu'à 100°C. L'utilisation sous température et pression devrait permettre d'effectuer l'injection de vapeurs, et de préparer des mélanges à l'état condensé dans une large gamme de concentration.

L'invention n'est pas limitée à l'exemple de réalisation représenté sur les figures. Ainsi, la commande électrique de l'obturateur 3 peut être obtenue par d'autres moyens tels que des moyens pneumatiques, un moteur agissant sur une vis, etc. Selon le moyen et les conditions d'utilisation, les fluides peuvent être des gaz, des vapeurs ou des liquides.

**Revendications**

1. Vanne d'injection d'une faible quantité de fluide traceur dans un flux de fluide porteur, comportant un corps de vanne et un obturateur à commande électrique coopérant avec un siège de fermeture pour commander le débit d'admission du fluide traceur, caractérisée en ce que l'obturateur (3) est situé au centre d'une chambre (12) de mélange et que le fluide porteur traverse constamment cette chambre perpendiculairement à la direction de mouvement dudit obturateur en balayant ainsi toute la périphérie de son siège (8).

2. Vanne selon la revendication 1, caractérisée en ce que l'obturateur (3) présente la forme d'une bille qui est fixée par la moitié environ de sa superficie à des moyens de commande électrique (2, 5) et qui s'appuie, en absence de commande électrique, par une calotte de l'autre moitié, sur le siège (8), le restant de la superficie de la bille se trouvant dans ladite chambre (12) de mélange entre une canalisation d'entrée pour le fuide porteur (20) et une canalisation de sortie (21) de la chambre.

3. Vanne selon l'une des revendications précédentes, caractérisée en ce que les moyens de commande électrique sont constitués par un empilement (5) de lames piézoélectriques dont la compression est fonction de la tension électrique appliquée à chacune des lames.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 576 103 (MEYNELL & SONS LTD) <br> * Page 2, ligne 24 - page 5, ligne 36; figure * <br> --- | 1-3 | B 01 F 15/00 <br> F 16 K 31/00 <br> G 05 D 11/13 |
| D,Y | FR-A-2 425 599 (C.E.A.) <br> * En entier * <br> --- | 1-3 | |
| A | FR-A-1 478 855 (GASKELL & CHAMBERS) <br> * En entier * <br> --- | 1 | |
| A | EP-A-0 119 665 (THE DOW CHEMICAL CO.) <br> * Page 4, ligne 7 - page 7, ligne 18; figures 1-3 * <br> --- | 1 | |
| A | FR-A-1 258 274 (COMPAGNIE DE SAINT-GOBAIN) <br> * En entier * <br> ----- | 1 | |

DOMAINES TECHNIQUES
RECHERCHES (Int. Cl.4)

B 01 F
F 16 K
G 05 D
H 01 L

Le présent rapport a été établi pour toutes les revendications

| Lieu de la recherche | Date d'achèvement de la recherche | Examinateur |
|---|---|---|
| LA HAYE | 15-06-1988 | ROSE A.R.P. |

EPO FORM 1503 03.82 (P0402)